# EUROPEAN PATENT SPECIFICATION

(11) **EP 2 444 658 B1**
(45) Date of publication and mention of the grant of the patent: **19.10.2016**
(21) Application number: 10188346.0
(22) Date of filing: 21.10.2010
(51) Int. Cl.: F03D 1/06

(54) **Method to retrofit a blade of a wind turbine**
Nachrüstungsvefahren für einen Schaufel einer Windturbine
Procédé de rééquipement pour une pale d'éolienne

(43) Date of publication of application: 25.04.2012
(73) Proprietor: Siemens Aktiengesellschaft, 80333 München (DE)
(72) Inventor: Kristensen, Jens Jørgen Østergaard, 9240, Nibe (DK); Thrue, Carsten, 8740, Braedstrup (DK)

(56) References cited:
- EP-A1- 2 031 243
- WO-A1-02/29247
- WO-A1-99/50141
- WO-A1-2006/122547
- WO-A2-2009/080316

## Description

The invention relates to a method to retrofit a blade of a wind turbine.

It is known to use shaped devices to generate beneficial vortexes asides a wind turbine blade. These devices are known as "vortex generators".

The vortexes are used to influence the air flow along the surface of the wind turbine blade. For example the vortex generators are used to counteract the stall of air along the blade. Thus the rotational movement of the blade is improved by the generators.

WO 0015961 A1 discloses a wind turbine blade, which is provided with a plurality of vortex generators. They project from the lee surface of the blade and are used to control a so called "boundary layer separation".

WO 2008113350 discloses an advantageous design of a wind turbine blade. The blade shows one or more parallel rows of sub-boundary layer vortex generators. The resulting blade is resistant to stall and a high maximum lift coefficient is obtained for the resulting blade.

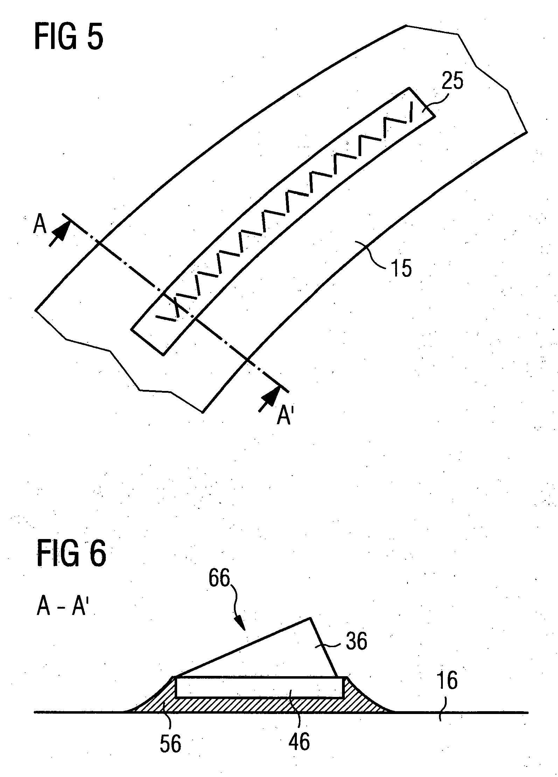

FIG 5 shows a blade 15 which contains a row of vortex generators 25.

For the section A-A' reference is made to FIG 6.

It is known to attach the row of vortex generators 25 to the blade 15 for example by glue.

This situation is shown in FIG 6. The vortex generator 66 contains a platform (or basement or basis) 46 and an extension part 36, which might be formed like a fin.

The vortex generator 66 is connected with the wind turbine blade 16 by a glued connection 56, while the glue is applied between the surface of the blade 16 and the platform 46. The extension part 36 extends from the glued connection 56 and from the blade 16 and is also responsible for the generation of vortexes.

Due to the requested lifetime of more than twenty years for offshore-wind turbines it might be a problem to ensure a long-lasting connection by applied glue.

An additional drawback of this solution is that the aerodynamic characteristics of the vortex generator are influenced
- by the extension part 36 and
- by the platform 46, as it extends the surface of the blade 16, and also
- by the height of the glued connection 56.

A combination of these features may lead to blade-characteristics, which are not intended.

It is even known to integrate the vortex generators asides the blade. They are integrated during the manufacturing-process of the blade and thus contribute to the surface of the manufactured blade.

In this case the vortex-generators are fixed for the whole live-time of the blade, but it is not possible to adjust the vortex-generators at the surface of the blade if this might be needed later.

The document WO 2006 122547 A1 describes a pitch controlled wind turbine blade, which comprises so called "turbulence generating means" Document WO 2009 080316 A2 shows a method to manufacture a blade according to the preamble of claims 1 and 4.

It is therefore the aim of the invention to provide a method to manufacture an improved blade of a wind turbine, which contains a vortex-generator, while the vortex-generator has to withstand for long time the ambient influences acting on the blade and where the vortex-generator can be adjusted to the blade-situation if needed.

This aim is reached by the methods of claims 1 and 4.

Preferred configurations are object of the dependent claims. According to the invention the blade of the wind turbine contains at least one vortex-generator, which is positioned at the blade-surface. The vortex-generator is constructed and arranged in a way that it contributes to the aerodynamic characteristics of the blade.

The vortex-generator contains a platform and an extension-part. The blade contains a recess, which is constructed and arranged to receive at least a part of the platform of the vortex-generator. The platform is fixed at least partly within the recess.

Preferably the recess is formed into the surface of the blade while the blade is manufactured. The vortex-generator is adjusted, arranged and positioned later as a retrofit.

It is even possible to form the recess into the surface of the blade by milling. Thus there is the possibility to adjust a blade, which is already mounted to a hub on a wind-turbine-site.

The characteristics of the manufactured blade are more predictable than the characteristics of a prior-art blade.

Due to the recess and its interaction with the platform of the vortex-generator the connection is protected from ambient influences like ice, salt, frost, etc. Thus the connection remains stable for a long time.

Due to the recess, which might be formed into the blade while it is manufactured or which might be milled into the blade later, there is the possibility to retrofit the blade if needed.

Even damaged vortex-generators can be removed easily if needed.

There is even the possibility to adjust and/or to improve the distribution and/or the position of the vortex-generators later. This may be done in dependency to the site of the wind turbine or in dependency to other site-specific influences.

Preferably the vortex-generator or a number of them are arranged on a belt or a strip. The strip allows the positioning of a number of vortex-generators very easy and in less time.

In this case the belt or strip is preferably an integrated part of the platform. The recess is shaped to incorporate the belt or the strip together with the platform of the vortex-generators.

Another advantage is that the total adhered surface between the blade and the vortex-generators is increased whereby the vortex-generators are securely attached to the blade.

An even further advantage is that the vortex-generator is always established on its correct position - also in view to the height of the platform and in view to the extension unit.

Thus the vortex-generator is positioned in its aligned and dedicated optimum position.

Thus a set of blades show the same characteristics due to the well-defined position of the vortex-generator(s). The characteristics can be reproduced also very easy.

The recess may be formed into the blade while the blade is manufactured. For example a profile may be used, which shows a negative cast or imprint in view to the intended shape of the platform.

The profile may be put into a mould, which may be used within a "Vacuum Assisted Resin Transfer Moulding, VARTM"-process preferably.

The invention is shown in more detail by help of some figures.
- FIG 1: shows the invention in an overview,
- FIG 2: shows a configuration according to the invention, where the vortex-generator is applied to the blade-surface,
- FIG 3: shows another configuration according to the invention, where another vortex-generator is applied to the blade-surface,
- FIG 4: shows a detail of FIG 3 and thus refers to FIG 3,
- FIG 5: shows a prior-art blade, which contains a row of vortex generators as described in the introduction of this application, and
- FIG 6: shows a row of vortex generators, which are attached to the blade by glue as described in the introduction of this application.

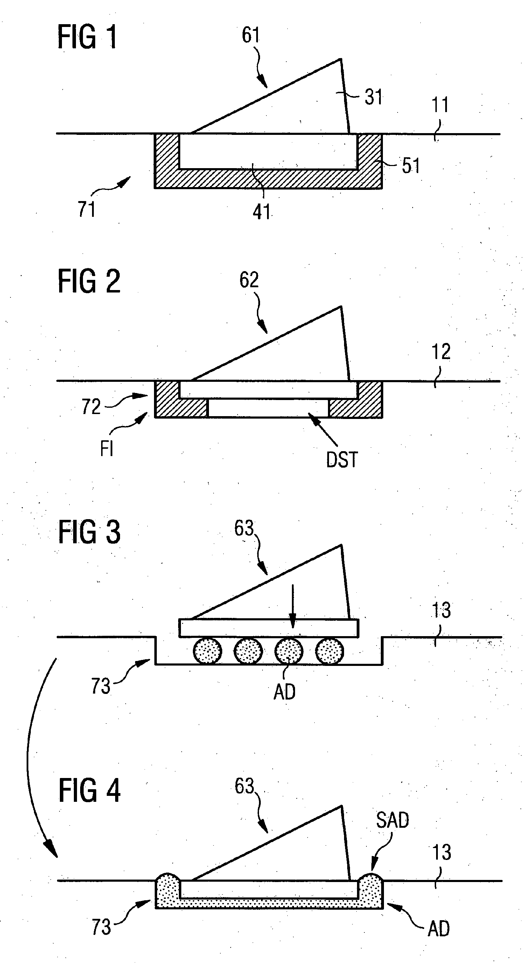

FIG 1 shows the preferred configuration according to the invention.

The vortex generator 61 contains a platform 41 and an extension-part 31.

The platform is used as basement or base for the extension-part 31.

The extension-part 31 may be preferably shaped like a fin.

The platform 41 of the vortex generator 61 is arranged within a recess 71.

The recess 71 is an integrated part of the blade 11 and might be formed and shaped into the blade 11 while the blade 11 is manufactured.

The recess 71 may be even milled into the blade 11 later, at a wind turbine site for example.

A connection 51 is provided to fix the platform 41 into the recess 71. This might be done by using adhesive, glue, silicone or even a double sided tape, which carries an adhesive.

It is even possible that the surface of the platform 41 and the inner surface of the recess 71 are shaped in a way that, they interact with each other to reach a fixed mechanic connection.

One structural or mechanic configuration might be the well known "dovetail", which is used to connect the platform within the recess.

Preferably only the extension-part 31 extends from the surface of the blade 11. Thus only the extension-part 31 contributes to the blade-characteristics, which are now better predictable.

Due to the recess 71 the connection 51 is protected from ambient influences. The influence of rain, ice, salt, frost, etc. is reduced. The connection thus stays stable even for a long time.

Due to the different ways, which are used to shape and form the recess into the blade, there is the possibility to retrofit the blade even later.

Even damaged vortex-generators 61 can be removed and exchanged very easy.

There is even the possibility to adjust the number and/or to improve the distribution and/or to improve the position of the vortex-generators 61 later. Preferably this might be done in dependency to the wind turbine site or to the site-specific influences.

Preferably the vortex-generator or a number of them are arranged on a belt or a strip (not shown here in detail). Thus the strip may be an integrated part of the platform 41. The strip allows the positioning of a number of vortex-generators very easy in less time.

FIG 2 shows a configuration according to the invention, where the vortex-generator is applied to the blade-surface,

The vortex generator 62 contains a platform and an extension-part as shown in FIG 1.

The platform of the vortex generator 62 is arranged within a recess 72.

The recess 72 is an integrated part of the blade 12 and might be formed into the blade 12 as described above.

A double sided adhesive tape DST is used to arrange and prefix the vortex generator 62 via its platform (according to FIG 1 as described above) into the recess 72.

Next a remaining gap between the walls of the recess 72 and the platform of the vortex-generator 62 is filled with a fixation-material FI - with silicone or with so called "structural filler" for example.

This step is done to fix the vortex-generator for a longtime and to ensure that no water, no ice, no salt, etc. might gather there.

As described above the work to bring-in or to form or to shape the recess into the blade and/or the work to fix the vortex-generator-platform inside the recess might be done asides a wind-turbine site or even asides a place, where the blade is manufactured.

If the recess is shaped into the blade by milling asides the manufacturing-site the vortex-generator 62 might be fixed and positioned in a retrofit-work even asides this place or even asides a wind-turbine-site.

The invention might be preferably used asides a test site, where characteristics of acblade are tested and where blades are optimized for further use or for their evaluation.

FIG 3 and FIG 4 show another configuration according to the invention, where a vortex-generator 63 is applied to the surface of a blade 13 in a different way.

The vortex generator 63 contains a platform and an extension-part as shown in FIG 1 and in FIG 2.

The platform of the vortex generator 63 is arranged within a recess 73.

The recess 73 is an integrated part of the surface of the blade 12 and might be formed and shaped as described above.

An adhesive AD is applied into the recess 73 and is used to arrange and fix the platform of the vortex generator 63 into the recess 73 (according to FIG 1 and FIG 2 as described above).

The vortex-generator 63 is pressed into the recess 73 and its platform is positioned there. The adhesive AD is distributed inside the recess 73 in a way that substantially all "free spaces" around the platform of the vortex-generator 63 are filled with the adhesive AD.

Thus the amount of adhesive AD is chosen in a way that the gap between the side-walls of the recess 73 and the surface of the platform is filled completely with the adhesive.

The amount of adhesive AD is also chosen in a way that an additional amount of resin ADH closes a gap, which is defined by the surface of the blade and the top surface of the platform. Thus a circumferential rim or bead is arranged along this gap or along this line-of-contact.

The rim ensures that an area-of-attack is minimized there to fend water and ice off.

If needed the rim might be removed later, either in a "wet-condition" or in a "dry-condition" for example.

As a summary the invention is directed to the blade and is directed to the method to retrofit the blade as described above.

The invention is also directed to a blade, which is prepared to be retrofitted with a vortex-generator according to.the claimed method steps.

The invention is also directed to a vortex-generator, which is prepared to be used for a blade-retrofit according to the claimed method steps.

## Claims

1. Method to retrofit a blade of a wind turbine,
- where at least one recess is formed into the surface of a blade while it is manufactured or is formed into the surface of the blade afterwards,
- where a vortex-generator is positioned at the blade afterwards to contribute to the aerodynamic characteristics of the blade,
- where the vortex-generator, which contains a platform and an extension-part, is pressed with its platform into the recess in a way that the recess receives at least a part of the platform of the vortex-generator,
- where the platform is fixed within the recess,
**characterized in that**
- a double sided adhesive tape is used to arrange and position the platform of the vortex generator within the recess, and
- a remaining gap between the walls of the recess and the platform of the vortex-generator is filled with a fixation-material.

2. Method according to claim 1,
wherein the fixation-material is a silicone.

3. Method according to claim 1,
wherein the fixation-material is a structural filler.

4. Method to retrofit a blade of a wind turbine,
- where at least one recess is formed into the surface of a blade while it is manufactured or is formed into the surface of the blade afterwards,
- where a vortex-generator is positioned at the blade afterwards to contribute to the aerodynamic characteristics of the blade,
- where the vortex-generator, which contains a platform and an extension-part, is pressed with its platform into the recess in a way that the recess receives at least a part of the platform of the vortex-generator,
- where the platform is fixed within the recess,
**characterized in that**
- an adhesive is used to arrange and position the platform of the vortex generator within the recess, and
- the adhesive is distributed inside the recess to fill substantially all free spaces around the platform of the vortex-generator when the vortex-generator is pressed into the recess.

## Patentansprüche

1. Verfahren zum Nachrüsten eines Blatts einer Windenergieanlage,
- wobei entweder bei der Herstellung oder danach mindestens eine Vertiefung in der Oberfläche eines Blatts ausgebildet wird,
- wobei danach ein Wirbelgenerator an dem Blatt positioniert wird, der zu den aerodynamischen Eigenschaften des Blatts beiträgt,
- wobei der Wirbelgenerator, der eine Grundplatte und einen Aufsatzteil umfasst, mit seiner Grundplatte auf eine solche Weise in die Vertiefung gedrückt wird, dass die Vertiefung zumindest einen Teil der Grundplatte des Wirbelgenerators aufnimmt,
- wobei die Grundplatte in der Vertiefung fixiert wird,
**dadurch gekennzeichnet, dass**
- ein zweiseitiges Klebeband zum Anordnen und Positionieren der Grundplatte des Wirbelgenerators in der Vertiefung benutzt wird und
- ein verbleibender Spalt zwischen den Wänden der Vertiefung und der Grundplatte des Wirbelgenerators mit einem Fixiermaterial gefüllt wird.

2. Verfahren nach Anspruch 1,
bei dem es sich bei dem Fixiermaterial um ein Silikon handelt.

3. Verfahren nach Anspruch 1,
bei dem es sich bei dem Fixiermaterial um einen Strukturfüllstoff handelt.

4. Verfahren zum Nachrüsten eines Blatts einer Windenergieanlage,
- wobei entweder bei der Herstellung oder danach mindestens eine Vertiefung in der Oberfläche eines Blatts ausgebildet wird,
- wobei danach ein Wirbelgenerator an dem Blatt positioniert wird, der zu den aerodynamischen Eigenschaften des Blatts beiträgt,
- wobei der Wirbelgenerator, der eine Grundplatte und einen Aufsatzteil umfasst, mit seiner Grundplatte auf eine solche Weise in die Vertiefung gedrückt wird, dass die Vertiefung zumindest einen Teil der Grundplatte des Wirbelgenerators aufnimmt,
- wobei die Grundplatte in der Vertiefung fixiert wird,
**dadurch gekennzeichnet, dass**
- ein Klebstoff zum Anordnen und Positionieren der Grundplatte des Wirbelgenerators in der Vertiefung benutzt wird und
- der Klebstoff in der Vertiefung so verteilt wird, dass er im Wesentlichen alle Zwischenräume um die Grundplatte des Wirbelgenerators herum füllt, wenn dieser in die Vertiefung gedrückt wird.

## Revendications

1. Procédé d'amélioration en rattrapage d'une pale d'une éolienne,
- où au moins un évidement est formé dans la surface d'une pale tandis qu'elle est fabriquée ou est formé dans la surface de la pale par la suite,
- où un générateur de tourbillon est positionné au niveau de la pale par la suite pour contribuer aux caractéristiques aérodynamiques de la pale,
- où le générateur de tourbillon, qui contient une plate-forme et une partie d'extension, est pressé avec sa plate-forme à l'intérieur de l'évidement de telle manière que l'évidement reçoit au moins une partie de la plate-forme du générateur de tourbillon,
- où la plate-forme est fixée à l'intérieur de l'évidement,
**caractérisé en ce que**
- un ruban adhésif double face est utilisé pour agencer et positionner la plate-forme du générateur de tourbillon à l'intérieur de l'évidement, et
- un espace restant entre les parois de l'évidement et la plate-forme du générateur de tourbillon est rempli avec un matériau de fixation.

2. Procédé selon la revendication 1,
dans lequel le matériau de fixation est un silicone.

3. Procédé selon la revendication 1,
dans lequel le matériau de fixation est une charge structurelle.

4. Procédé d'amélioration en rattrapage d'une pale d'une éolienne,
- où au moins un évidement est formé dans la surface d'une pale tandis qu'elle est fabriquée ou est formé dans la surface de la pale par la suite,
- où un générateur de tourbillon est positionné au niveau de la pale par la suite pour contribuer aux caractéristiques aérodynamiques de la pale,
- où le générateur de tourbillon, qui contient une plate-forme et une partie d'extension, est pressé avec sa plate-forme à l'intérieur de l'évidement de telle manière que l'évidement reçoit au moins une partie de la plate-forme du générateur de tourbillon,
- où la plate-forme est fixée à l'intérieur de l'évidement,
**caractérisé en ce que**
- un adhésif est utilisé pour agencer et positionner la plate-forme du générateur de tourbillon à l'intérieur de l'évidement, et
- l'adhésif est réparti à l'intérieur de l'évidement pour remplir sensiblement tous les espaces libres autour de la plate-forme du générateur de tourbillon lorsque le générateur de tourbillon est pressé à l'intérieur de l'évidement.
